# EUROPÄISCHE PATENTSCHRIFT

(11) **EP 2 404 800 B1**
(45) Veröffentlichungstag und Bekanntmachung des Hinweises auf die Patenterteilung: **19.06.2019**
(21) Anmeldenummer: 11002665.5
(22) Anmeldetag: 31.03.2011
(51) Int. Cl.: B60T 13/66, B60T 17/22, G01L 5/28

(54) **Verfahren und Vorrichtung zur Durchführung einer Bremsenprüfung an Anhänger- und / oder Aufliegerfahrzeugen**
Method and device for carrying out a brake test for trailer vehicles
Procédé et dispositif destinés à l'exécution d'une vérification des freins sur des remorques et/ou des semi-remorques

(30) Priorität: 07.07.2010 DE 102010026411
(43) Veröffentlichungstag der Anmeldung: 11.01.2012
(73) Patentinhaber: MAN Truck & Bus AG, 80995 München (DE)
(72) Erfinder: Staufer, Werner, 85051 Ingolstadt (DE); Gerusel, Karsten, Dr., 80689 München (DE)
(74) Vertreter: Reichert, Christian

(56) Entgegenhaltungen:
- DE-A1-102008 029 488
- DE-C1- 10 026 688

## Beschreibung

Die Erfindung betrifft ein Verfahren zur Durchführung einer Bremsenprüfung an Anhänger- und/oder Aufliegerfahrzeugen nach dem Oberbegriff des Anspruchs 1. Ferner betrifft die Erfindung eine Vorrichtung zur Durchführung eines derartigen Verfahrens nach dem Oberbegriff des Anspruchs 15.

Je nach Einsatzzweck können Nutzfahrzeuge alternativ als Solofahrzeug oder in einer Fahrzeugkombination betrieben werden. Unter Fahrzeugkombinationen werden dabei Kombinationen von Zugfahrzeugen bzw. Zugmaschinen mit Anhängern oder Aufliegern verstanden, wobei als Anhänger zum Beispiel Gelenkdeixelanhänger oder Zentralachsanhänger allgemein bekannt sind. Auflieger werden hauptsächlich in Form von Sattelkraftfahrzeugen betrieben. Insbesondere zu Spitzenzeiten, in denen eine hohe Auslastung der Fuhrparks erfolgt, kann es vorkommen, dass gegebenenfalls alte Anhänger oder Auflieger zur Abdeckung von Lastspitzen verwendet werden, deren Bremsen nicht ordnungsgemäß funktionieren, weil zum Beispiel eine erforderliche Bremsenprüfung versäumt oder nicht durchgeführt wurde. Dies stellt im praktischen Betrieb, insbesondere bei beladenem Auflieger bzw. Anhänger eine ernsthafte Gefahr dar.

Prüfsysteme zur Bremsenprüfung bei Kraftfahrzeugen mit Druckluftbremsanlage sind bereits bekannt, so zum Beispiel aus der DE 10 2005 024 335 A1, die jedoch lediglich generell ein Prüfverfahren zur Bremsenprüfung einer Druckluftbremsanlage zur Verfügung stellt. Ferner ist aus der Offenlegungsschrift DE 10 2008 029 488 A1 auch eine Ansteuereinheit für ein Bremssystem eines Lastzugs bekannt, wobei die Ansteuereinheit in erster Linie eingerichtet ist, ein Verfahren, das das Beladen von Lastzügen erleichtert, durchzuführen.

Demgegenüber ist es Aufgabe der vorliegenden Erfindung, ein Verfahren und eine Vorrichtung zur Durchführung einer Bremsenprüfung an Anhänger- und/oder Aufliegerfahrzeugen zur Verfügung zu stellen, mittels dem bzw. mittels der die Funktionsfähigkeit einer Anhänger- bzw. Aufliegerbremsanlage auf einfache Weise mit hoher Funktionssicherheit durchgeführt werden kann.

Diese Aufgabe wird gelöst mit den Merkmalen der unabhängigen Patentansprüche. Vorteilhafte Ausgestaltungen hierzu sind Gegenstand der darauf rückbezogenen Unteransprüche.

Gemäß Anspruch 1 ist ein Verfahren zur Durchführung einer Bremsenprüfung an Anhänger- und/oder Aufliegerfahrzeugen vorgesehen, das folgende Verfahrensschritte aufweist:
a) Erfassen eines am Zugfahrzeug neu angekoppelten Aufliegers oder Anhängers,
b) Initialisierung einer On-Board-Bremsenprüfung für die Auflieger- oder Anhängerbremsanlage,
c) Einleiten wenigstens eines definierten Bremsvorgangs mittels der Auflieger- oder Anhängerbremsanlage nach einer definierten Fahrstrecke,
d) Erfassen und Ermitteln der Bremswirkung des wenigstens einen definierten Bremsvorgangs als Bremswirkung-Istwert, der mit einem vorhandenen Bremswirkung-Sollwert verglichen wird, und
e) Ausgabe eines Informationssignals unter Berücksichtigung des Auswerteergebnisses gemäß Schritt d).

Mit einer derartigen erfindungsgemäßen Verfahrensführung kann auf einfache und funktionssichere Weise zuverlässig festgestellt werden, ob eine Bremsanlage eines neu angekuppelten Aufliegers oder Anhängers vorschriftsmäßig betrieben werden kann oder nicht. Dabei können, wie die nachfolgenden Ausführungen noch zeigen werden, in vorteilhafter Weise die ohnehin am Fahrzeug vorhandenen elektronisch geregelten Brems- und Fahrwerkssysteme in einer vorteilhaften Doppelfunktion dazu verwendet werden, um die für die Funktionsüberprüfung der Auflieger- oder Anhängerbremsanlage erforderlichen Parameter zur Verfügung zu stellen. Die Funktionsüberprüfung kann somit auch auf bauteiltechnisch wenig aufwändige Weise durchgeführt werden. Unter einem Informationssignal wird dabei jede Art von Signal verstanden, das eine Information für eine Auswerteeinrichtung und/oder ein Steuergerät und/oder einen Bediener, sei es zur Weiterverarbeitung und/oder zur Anzeige bestimmt, verstanden.

Gemäß einer besonders bevorzugten konkreten Ausgestaltung ist vorgesehen, dass die Erfassung eines am Zugfahrzeug neu angekoppelten Aufliegers oder Anhängers über wenigstens eine an der Schnittstelle zwischen dem Zugfahrzeug einerseits und dem Anhänger oder Auflieger andererseits ohnehin vorhandene Schnittstellentechnik (zum Beispiel Sattelkupplung oder dergleichen Anhängerkupplungen) dergestalt erfolgt, dass einem Bremsenprüf-Steuergerät bzw. -Steuermodul nach ordnungsgemäßer Ankopplung (welche zum Beispiel ohne eine zusätzliche Sensorik lediglich durch ordnungsgemäßen elektrischen Anschluss, zum Beispiel einer Anhänger- bzw. Aufliegerbeleuchtung und/oder ordnungsgemäßen Anschluss einer Druckluftversorgung durch zum Beispiel einen zentralen Bordrechner erfasst wird) eines neuen Aufliegers oder Anhängers wenigstens ein Signal und/oder Parameter und/oder Datensatz übermittelt wird, aus dem mittelbar oder unmittelbar definierte Informationen über die zu prüfende Bremsanlage des Aufliegers oder Anhängers sowie gegebenenfalls auch weitere Informationen über den Typ und den Aufbau und/oder die Beladung und/oder eine statische Achslast des Aufliegers oder Anhängers ableitbar sind. Die ohnehin vorhandene übliche Schnittstellentechnik kann dabei zum Beispiel eine herkömmliche elektrische Schnittstelle oder eine Druckluftversorgung zwischen Zugfahrzeug und Anhänger bzw. Auflieger sein. Beispielsweise können mittels einer derartigen Schnittstelle Informationen wie Typ und Aufbau der Bremsanlage sowie gegebenenfalls auch Alter der Bremsanlage und/oder des Anhängers bzw. Aufliegers übermittelt werden. Die Beladung und/oder eine Achslast kann zum Beispiel aus einem Signal eines ALB-Sensors einer automatisch-lastabhängigen Bremse (ALB) ermittelt bzw. abgeleitet oder von diesem geliefert werden, um nur ein weiteres Beispiel zu nennen. Diese Daten können dann in beliebigen Kombinationen dazu verwendet werden, um ein für die zu prüfende Bremsanlage im Bremsprüf-Steuergerät bzw. -Steuermodul hinterlegtes Prüfmuster für diese Auflieger- oder Anhängerbremsanlage aufzurufen und/oder zu aktivieren.

Die Initialisierung der On-Board-Bremsenprüfung für die Auflieger- oder Anhängerbremsanlage kann dabei zum Beispiel selbsttätig bei jeder erfassten Neuankopplung oder selbsttätig in Abhängigkeit vom erfassten Auflieger- oder Anhängertyp erfolgen. Alternativ dazu kann die Initialisierung der On-Board-Bremsenprüfung für die Auflieger- oder Anhängerbremsanlage aber auch bedienerindividuell vorgegeben werden, zum Beispiel durch Knopf- oder Tastendruck bzw. auch mittels einer Sprachsteuerung. Unter einer Initialisierung bzw. Aktivierung der Bremsenprüfung wird dabei hauptsächlich verstanden, dass sich das System nunmehr in einen Betriebsmodus versetzt, in dem vom Bediener eine definierte Fahrstrecke zurückgelegt werden kann, innerhalb der dann ein Bremsenfunktionstest und damit wenigstens ein definierter Bremsvorgang zur Bremsenprüfung vorgenommen wird. Diese Bremsenprüfung kann vom Fahrer grundsätzlich optional vorgenommen werden, das heißt, dass der Fahrer die Bremsenfunktionsprüfung auch ablehnen und damit beenden kann. Gemäß einer besonders bevorzugten Ausgestaltung ist jedoch vorgesehen, dass die Überprüfung der Auflieger- oder Anhängerbremsanlage für den Fall, dass dies vom Bremsprüf-Steuergerät bzw. - Steuermodul so vorgegeben wird, zwingend durchgeführt werden muss, da ansonsten ein weiterer ordnungsgemäßer Betrieb der Zugmaschine nicht freigegeben wird. Dies kann zum Beispiel dergestalt erfolgen, dass die Leistung der Zugmaschine in einem nennenswerten Umfang gedrosselt wird, zum Beispiel bei lediglich 25% der maximalen Leistung liegt oder aber auch dergestalt, dass der Zugfahrzeugbetrieb insgesamt gesperrt wird.

Um zu testen, ob zum Beispiel aufgrund Fahrbahnbeschaffenheit, Reifendefekt, Witterung etc. überhaupt eine ordnungsgemäße Bremsenüberprüfung stattfinden kann, ist gemäß einer bevorzugten Ausführungsvariante vorgesehen, dass zuerst eine vorzugsweise Bestandteil der definierten Fahrstrecke bildende Initialisierungsstrecke mit definiert geringer Geschwindigkeit abgefahren wird, um zum Beispiel einen ASR-Eingriff zu testen, das heißt einen schlechten Reibwert zwischen Reifen und Fahrbahn zu erkennen und bei definiertem Schlupf gegebenenfalls ein Abbruchkriterium für den Bremsentest auszugeben bzw. alternativ eine Kennlinien- bzw. Kennfeldanpassung für den Bremsentest vorzunehmen. In letzterem Falle bzw. nach ordnungsgemäßem Durchfahren der Initialisierungsstrecke wird dann der eigentliche Bremsentest durchgeführt. Gemäß einem besonders bevorzugten Erfindungsaspekt kann somit vorgesehen sein, dass vor der eigentlichen On-Board-Bremsenprüfung eine Plausibilitätsprüfung durchgeführt wird, mittels der in Abhängigkeit vom Erreichen und/oder Erfüllen und/oder Erfassen vorgegebener Parameter und/oder Werte, wie zum Beispiel von Schwellwerten, die ordnungsgemäße Durchführungsmöglichkeit der Bremsenprüfung und/oder ein Defekt der Fahrzeugbereifung und/oder ein Defekt einer zur Bremsenprüfung benötigten Baueinheit erfasst bzw. festgestellt wird. Ein derartiger Defekt wird dann bevorzugt dem Fahrer auch angezeigt, so dass dieser darüber informiert wird, welcher Defekt konkret vorliegt bzw. dass keine ordnungsgemäße Bremsenprüfung möglich ist. Auch in Verbindung mit dieser Plausibilitätsprüfung kann es von Vorteil sein, dass das Fahrzeug entlang einer definierten Wegstrecke verfahren wird. Beispielsweise kann hier somit eine ordnungsgemäße Bereifung festgestellt werden, zum Beispiel ein vorhandener Reifenschaden oder Reifendefekt, wobei der Reifendefekt dabei ausdrücklich in einem weiteren Sinne zu verstehen ist und ausdrücklich auch zum Beispiel einen mehr oder weniger luftlosen Reifen umfassen soll. Denn durch die im Fahrzeug ohnehin vorhandene Sensorik kann zum Beispiel festgestellt werden, dass ein Reifen bei Initialisierung eines Bremsenvorgangs sofort blockiert bzw. durchdreht, so dass auf ein entsprechendes Schadensprofil geschlossen werden kann.

Gemäß einer weiteren besonders bevorzugten Ausgestaltung ist vorgesehen, dass der wenigstens eine definierte Bremsvorgang spätestens nach einer Fahrstrecke von 50m und/oder in der Ebene bzw. auf einer eine konstante Steigung aufweisenden Gefällestrecke eingeleitet wird. Dadurch ist sichergestellt, dass die Überprüfung der Auflieger- oder Anhängerbremsanlage lediglich bei niedrigen Beschleunigungen und Geschwindigkeiten durchgeführt wird und damit in einem Betriebsbereich des Fahrzeugs, indem eine nicht ordnungsgemäß funktionierende Bremsanlage weniger gefährlich ist. Eine zuverlässige Aussage über die Wirkung der Bremse lässt sich nach der erfindungsgemäßen Lehre auch bei kurzen Fahrstrecken bis zu 50m erzielen, wenn die entsprechenden Vergleichswerte im Bremsenprüf-Steuergerät bzw. -Steuermodul hinterlegt sind. Neben einer bevorzugten Geradeausfahrt ist grundsätzlich aber auch eine gleichmäßige Kurvenfahrt geeignet, um die erfindungsgemäße Bremsenüberprüfung durchzuführen, sofern hier dann bei der Kurvenfahrt ein Korrekturfaktor mit einbezogen wird, der die bei der Kurvenfahrt nach außen gerichtete dynamische Achslastverlagerung berücksichtigt.

Grundsätzlich gibt es vielfältigste Möglichkeiten, die Radbremsen der Auflieger- oder Anhängerbremsanlage konkret auf ihre Funktionstüchtigkeit hin zu überprüfen. Dabei können die Radbremsen der Auflieger- oder Anhängerbremsanlage nach einem definiert vorgegebenen Prüfmuster einzeln oder gruppenweise oder vollständig gebremst werden und der jeweils erfasste Bremswirkung-Istwert mit einem entsprechenden, die Einzelbremsung oder die gruppenweise Bremsung oder die vollständige Bremsung aller Radbremsen charakterisierenden Bremswirkung-Sollwert verglichen werden. Zum Beispiel kann bei einer Einzelbremsung oder bei einer gruppenweisen Abbremsung der Bremsen der Auflieger- oder Anhängerbremsanlage auch vorgesehen sein, dass mehrere Bremsungen zeitlich gesehen hintereinander durchgeführt werden, und zwar solange, bis alle zu prüfenden Bremsen abgebremst und überprüft worden sind, wobei für jeden einzelnen Bremsvorgang dann eine definierte Fahrstrecke zur Einleitung des definierten Bremsvorgangs vorgegeben wird. Mit der Möglichkeit einer Überprüfung der einzelnen Radbremsen lässt sich vorteilhaft ein Defekt oder Mangel einer Bremsanlage auch individuell den jeweiligen Radbremsen zuordnen und/oder, was nachfolgend noch näher ausgeführt wird, ein Beladungszustand ermitteln. Dies ist bei einer gruppenweisen oder vollständigen Abbremsung der Bremsanlage nicht so detailliert möglich; jedoch liegt bei einer gruppenweisen oder vollständigen Abbremsung von einzelnen Rädern dann die Information über eine nicht ordnungsgemäß funktionierende Bremsanlage relativ schnell vor und es können gegebenenfalls weitere Maßnahmen eingeleitet werden, um eine Einzelüberprüfung der gegebenenfalls als defekt erkannten Bremsanlage vorzunehmen. Gegebenenfalls können auch pro Rad bzw. Bremse mehrere Bremsungen vorgegeben sein, um eine verlässlichere Aussage über die Bremsenfunktion zu erhalten. Dies kann zum Beispiel bei schwankendem Reibwert der Fahrbahn erforderlich sein.

Gemäß einer weiteren besonders bevorzugten Verfahrensführung ist vorgesehen, dass der definierte Bremsvorgang dadurch eingeleitet wird, dass an die jeweils abzubremsenden Radbremsen für eine definierte Zeitdauer ein definierter Bremsdruck angelegt wird, wobei die Druckvorgabe bevorzugt so gewählt wird, dass, für einen sanften Bremsvorgang, ein zeitlich gestreckter, stetiger Bremsdruckaufbau bis zu einem definierten Bremsdruckmaximum erfolgt, welches Bremsdruckmaximum kleiner oder gleich dem maximalen Bremsdruck für die jeweilige Radbremse sein kann. Alternativ dazu kann aber auch vorgesehen sein, dass, für ein schlagartiges Abbremsen, ein plötzlicher, peakartiger Bremsdruck vorgegeben wird, der kleiner oder gleich einem maximalen Bremsdruck für die jeweilige Radbremse ist. Die jeweilige Art des Bremsvorgangs kann je nach Anhängertyp bzw. Aufliegertyp individuell ausgewählt und vorgegeben werden, so dass für jeden Anhänger- bzw. Aufliegertyp die optimalen Funktionsüberprüfungen stattfinden können.

Für ein unverfälschtes Ergebnis im Hinblick auf die Bremswirkung der Anhänger- oder Aufliegerbremsanlage ist gemäß einer weiteren besonders bevorzugten Ausgestaltung vorgesehen, dass beim definierten Bremsvorgang lediglich die Aufhänger- oder Aufliegerbremsanlage alleine, nicht jedoch die Bremsanlage eines den Auflieger- bzw. Aufhänger ziehenden Zugfahrzeugs betätigt wird. Falls diese aber dennoch mitbetätigt werden sollte, kann zuvor auch die Bremswirkung des Zugfahrzeugs alleine erfasst werden, indem zum Beispiel die erfindungsgemäße Bremsenprüfung für die Zugmaschine alleine durchgeführt wird. Dieser so ermittelte Wert kann dann bei der Bremsenprüfung der Anhänger- bzw. Aufliegerbremsanlage entsprechend berücksichtigt, zum Beispiel abgezogen werden.

Wie bereits zuvor angedeutet, ist gemäß einer besonders bevorzugten Ausgestaltung vorgesehen, dass zur Erfassung und Ermittlung der Bremswirkung eines definierten Bremsvorgangs Daten und/oder Parameter wenigstens eines im Fahrzeug installierten elektronisch geregelten Brems- und Fahrwerksystems erfasst und aus diesem ein Bremswirkung-Istwert ermittelt wird. Derartige elektronisch geregelte und ohnehin im Fahrzeug vorhandene Brems- und Fahrwerksysteme können zum Beispiel ein AntiBlockiersystem (ABS) und/oder eine Anti-Schlupf-Regelung (ASR) und/oder eine Elektronische-Bremsen-Steuerung (EBS) und/oder ein Elektronisches-Stabilitäts-Programm (ESP) und/oder eine Fahrdynamik-Regelung (FDR) und/oder eine automatisch-lastabhängige Bremse (ABL) sein. Diese gegebenenfalls ohnehin am Fahrzeug vorhandenen elektronisch geregelten Brems- und Fahrwerkssysteme können somit in baulich wenig aufwändiger Weise vorteilhaft gleichzeitig in einer Doppelfunktion dazu dienen, die für die Funktionsüberprüfung der Bremsanlage des Aufliegers oder Anhängers benötigten Daten zur Verfügung zu stellen. Beispielsweise kann hier vorgesehen sein, dass an dem wenigstens einen abgebremsten Rad mittels wenigstens eines Schlupf- und/oder Drehzahlsensors ein Schlupf bzw. eine Raddrehzahl während des definierten Bremsvorgangs erfasst wird, welcher Schlupf- und/oder Raddrehzahlwert selbst oder als ein auf der Basis der Raddrehzahl ermittelter Parameter, zum Beispiel einer Drehbeschleunigung, den Bremswirkung-Istwert darstellt, der mit einem entsprechenden, den Bremswirkung-Sollwert darstellenden Vergleichswert verglichen wird, zum Beispiel im hier genannten Beispielfall mit einem Schlupf- und/oder Raddrehzahl-Sollwert oder einem Drehbeschleunigung-Sollwert. Weiter könnte zum Beispiel alternativ oder zusätzlich auch das Verhältnis Bremsdruck zu Drehzahlgradient, das heißt zum Beispiel eingesteuerter Druck im Verhältnis zur erreichten Raddrehzahl-Reduzierung, für die zu überprüfenden Radbremsen errechnet werden, um noch ein weiteres, nicht abschließendes Beispiel zu nennen.

Alternativ oder zusätzlich dazu kann auch vorgesehen sein, dass der Bremswirkung-Istwert aus dem zeitlichen Verlauf des Antriebsmomentes der Zugmaschine vor, während sowie gegebenenfalls nach dem definierten Bremsvorgang ermittelt wird, und zwar insbesondere durch Vergleich von Beschleunigungswerten, die auf der Basis des Antriebsmomentes des Zugfahrzeugs bzw. der Zugmaschine ermittelt werden.

Wird eine mangel- oder fehlerhafte Anhänger- oder Aufliegerbremsanlage festgestellt, so wird bevorzugt ein Fehlersignal als Informationssignal ausgegeben, das den Bediener entsprechend informiert und ihn anhält, die Bremsanlage zu überprüfen bzw. zu warten. Eine zusätzliche Zwangsmaßnahme, um den Bediener dazu anzuhalten, die Bremsanlage tatsächlich zu warten bzw. zu überprüfen oder gegebenenfalls auch den Auflieger oder Anhänger auszutauschen kann darin liegen, dass bei festgestellter mangel- oder fehlerhafter Anhänger- oder Aufliegerbremsanlage ein Zugmaschinenbetrieb gesperrt bzw. die Antriebsleistung der Zugmaschine in einem definierten Maße gedrosselt wird.

Die vorstehende Aufgabe wird zudem mit den Merkmalen des Anspruchs 15 gelöst, gemäß dem eine Vorrichtung zur Durchführung eines Verfahrens beansprucht wird, bei dem ein Bremsenprüf-Steuergerät oder Bremsenprüf-Steuermodul vorgesehen ist, in dem die erfassten Daten ausgewertet und mit Sollwerten verglichen werden sowie ein Informationssignal ausgegeben wird, wobei in dem Bremsenprüf-Steuergerät bzw. - Steuermodul Vergleichswerte, vorzugsweise in Form von Kennlinien oder dergleichen, abgelegt und abgespeichert sind, die definierte Bremswirkung-Sollwerte charakterisieren.

Die Erfindung wird nachfolgend beispielhaft anhand einer Zeichnung näher erläutert.

Es zeigen:
- Fig.1: schematisch ein beispielhaftes Ablaufdiagramm einer erfindungsgemäßen Funktionsüberprüfung einer Anhänger- bzw. Aufliegerbremsanlage,
- Fig. 2a bis 2c: unterschiedliche Bremsdruck-Verläufe bei der Abbremsung der Anhänger- bzw. Aufliegerräder, und
- Fig. 3: schematisch einen Sattelzug mit Zugfahrzeug und Sattelauflieger.

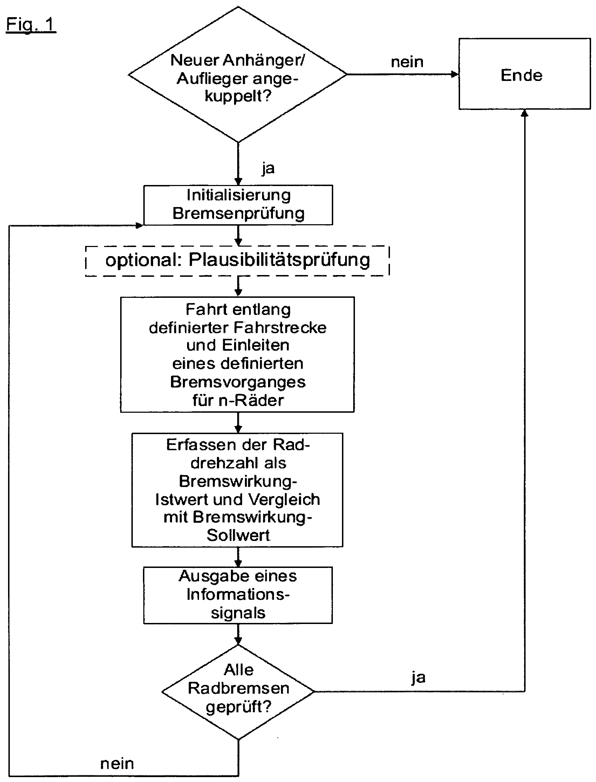

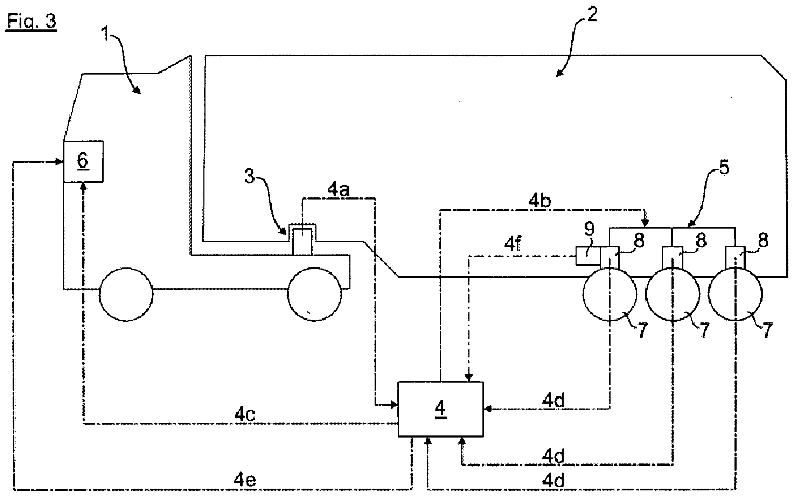

In der Fig. 3 ist schematisch ein Sattelzug mit einer Zugmaschine 1 und einem Sattelauflieger 2 dargestellt, welcher Sattelauflieger 2 hier beispielhaft dreiachsig ausgebildet ist. Der Sattelauflieger 2 ist hier über eine Sattelkupplung 3 an die Zugmaschine 1 angekoppelt, wobei die Sattelkupplung 3 eine Schnittstelle ausbildet, über die der Auflieger 2 mit elektrischer Energie und Druckluft versorgt ist, was hier jedoch nicht im Detail dargestellt ist. Durch die so ausgebildete Sattelkupplung 3 kann dann bei einem neu an die Zugmaschine 1 angekoppelten Auflieger 2 ein Informationssignal abgegriffen oder abgeleitet werden (Signalleitung 4a) und einem Bremsenprüf-Steuergerät 4 zugeführt werden, das das Informationssignal auswertet und zum einen erkennt (Fig. 1), dass ein neuer Auflieger an die Zugmaschine 1 angekuppelt worden ist. Zudem kann aus diesem Informationssignal vom Bremsenprüf-Steuergerät 4 abgeleitet werden, um welchen Aufliegertyp und vor allem um welche Auflieger-Bremsanlage 5, die hier lediglich äußerst schematisch dargestellt ist, es sich handelt. Des Weiteren kann zum Beispiel mittels eines hier lediglich beispielhaft und äußerst schematisch dargestellten ALB-Sensors 9 einer automatisch-lastabhängigen Bremse eine Massebestimmung durchgeführt bzw. initialisiert werden, zum Beispiel über eine Bestimmung bzw. Ermittlung der statischen Achslast bzw. durch einen Beschleunigungs-/Verzögerungsvergleich, um dem Bremsenprüf-Steuergerät einen Beladungszustand bzw. einen Massewert (Signalleitung 4f) zuzuführen und damit in die erfindungsgemäße Bremsenprüfung einfließen lassen zu können, so dass die Bremsenüberprüfung beladungs- bzw. lastabhängig vorgenommen werden kann.

An dieser Stelle sei erwähnt, dass das Bremsenprüf-Steuergerät 4 hier nur aus Übersichtlichkeitsgründen außerhalb des Zugfahrzeugs 1 dargestellt ist, dieses aber selbstverständlich Bestandteil einer On-Board-Unit sein kann oder ein separates Funktionsmodul ausbildet, das von der Fahrerkabine aus einsehbar und/oder bedienbar ist.

Neben der Bestimmung der Anhänger- bzw. Aufliegermasse und/oder -beladung kann mittels des ALB-Sensors 9 der automatisch-lastabhängigen Bremse gegebenenfalls vor der nachfolgend noch näher beschriebenen Initialisierung der Bremsenprüfung eine Plausibilitätsprüfung dahingehend durchgeführt werden, dass zum Beispiel die zu Durchfahren gewünschte Fahrstrecke abgefahren wird und getestet wird, ob diese definierten Fahrstreckeneigenschaften genügt. Konkret kann hierzu zum Beispiel durch Auswertung von ASR-Signalen und/oder von ALB-Sensorsignalen erfasst werden, ob es sich um eine Fahrstrecke mit unerwünschter Beschaffenheit, zum Beispiel unerwünschten Unebenheiten (Schlaglöcher, Buckel, etc.) oder um eine glatte Strecke mit niedrigem Reibwert handelt. Wird dies festgestellt, wird die Bremsenprüfung gegebenenfalls nicht freigegeben und zum Beispiel der Fahrer auf eine neue Teststrecke verwiesen.

Alternativ dazu kann, wie in der Fig. 1 strichliert dargestellt, auch vorgesehen sein, dass nach der Initialisierung der Bremsenprüfung eine solche optionale Plausibilitätsprüfung durchgeführt wird, mittels der zum Beispiel auf der Basis definierter erfasster ABS- und/oder ASR-Signale, um nur einige Beispiele zu nennen, eine Aussage darüber getroffen werden kann, ob eine ordnungsgemäße Bremsenprüfung überhaupt durchgeführt werden kann. Im Rahmen dieser Überprüfung kann dann zum Beispiel auch ein Defekt einer Fahrzeugbereifung festgestellt werden und dem Fahrer gegebenenfalls angezeigt werden.

Wie dies weiter aus der Fig. 1 entnommen werden kann, wird für den Fall, dass vom Bremsenprüf-Steuergerät 4 erkannt wird, dass ein neuer Auflieger 2 angekuppelt worden ist, eine Bremsenprüfung initialisiert und zum Beispiel dem Fahrer im Display 6 angezeigt (Signalleitung 4c).

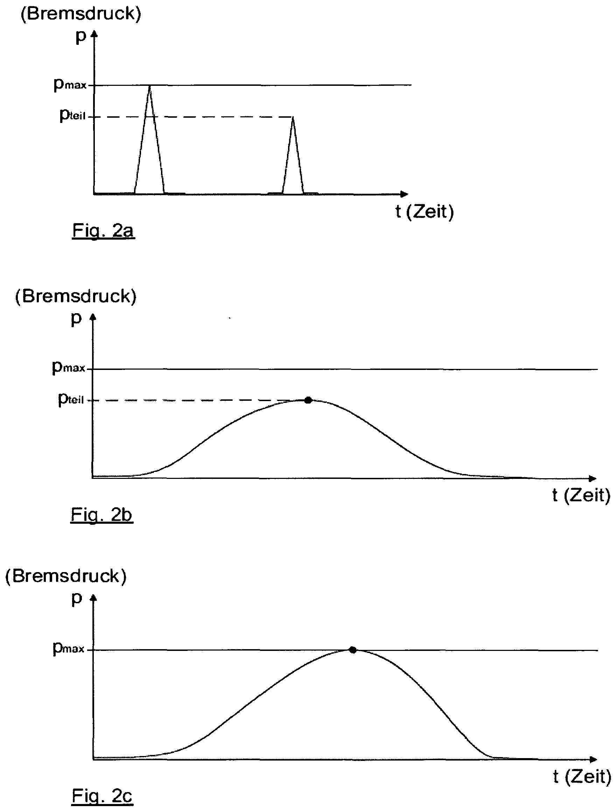

Wird nun bei initialisierter Bremsenprüfung das Fahrzeug vom Fahrer auf einer bevorzugt ebenen, geraden Strecke oder auch auf einer ein konstantes Gefälle aufweisenden Fahrstrecke angefahren, führt das Bremsenprüf-Steuergerät 4 vorzugsweise selbsttätig einen definierten Bremsvorgang durch, der für den jeweiligen erfassten Aufliegertyp bzw. Beladungsfall im Bremsenprüf-Steuergerät 4 hinterlegt ist. Beispielsweise wird hier über die strichpunktiert dargestellte Signalleitung 4b der Bremsanlage 5 ein Bremssignal zugeführt, gemäß dem zum Beispiel sämtliche sechs Räder der drei Achsen des Aufliegers 2, wie dies in der Fig. 2a dargestellt ist, nach einer vorgegebenen Wegstrecke zum Beispiel mit einem maximalen Bremsdruck beaufschlagt werden, was bei ordnungsgemäß funktionierenden Bremsanlage 5 im Wesentlichen zu einer Blockade der sechs Räder 7 führt. Alternativ dazu kann aber auch lediglich ein, bezogen auf den maximalen Bremsdruck reduzierter Teil-Bremsdruck an die Auflieger-Bremsanlage 5 angelegt werden, wie dies in der Fig. 2a durch den in der Bildebene rechten Peak dargestellt ist. Weitere Bremsdruckvarianten sind in den Fig. 2b und 2c dargestellt und werden nachfolgend noch näher erläutert.

Über die zum Beispiel Bestandteil eines ABS/EBS-Systems bildenden radseits vorhandenen Schlupf- und/oder Drehzahlsensoren 8 können dann von den einzelnen abgebremsten Rädern Schlupf- und/oder Drehzahlsignale 4d an das Bremsenprüf-Steuergerät 4 übermittelt werden, welche Drehzahlsignale 4d dann im Bremsenprüf-Steuergerät 4 verarbeitet und/oder mit dort für den ausgewählten Bremsvorgang hinterlegten Sollwerten, zum Beispiel Schlupf- und/oder Raddrehzahl-Sollwerten, verglichen werden. Weichen die Istwerte nicht von den Sollwerten ab, so wird über die Signalleitung 4e am Display 6 eine ordnungsgemäß funktionierende Bremsanlage des Aufliegers 2 angezeigt. Für den Fall jedoch, dass zum Beispiel einer der Raddrehzahl-Istwerte von einem vorgegebenen Raddrehzahl-Sollwert abweichen sollte, kann über die Signalleitung 4e ein Fehlersignal ausgegeben werden und im Display 6 angezeigt werden, dass eine nicht ordnungsgemäß funktionierende Auflieger-Bremsanlage 5 vorliegt.

Dieser eben beschriebene Bremsenprüfvorgang ist in der Fig. 1 schematisch nochmals als Ablaufplan in allgemeiner Weise dargestellt, wobei nach einer Initialisierung der Bremsenprüfung eine Fahrt entlang einer definierten Fahrstrecke erfolgt und ein definierter Bremsvorgang für n-Räder eingeleitet wird; die Begrifflichkeit n-Räder bedeutet hierbei, dass es, wie zuvor beschrieben, möglich ist, sämtliche Räder 7 gleichzeitig abzubremsen oder aber auch lediglich einzeln oder gruppenweise abzubremsen, je nach für den jeweiligen Aufliegertyp vorgesehenem Prüfmuster. Insbesondere für den Fall der einzelnen oder gruppenweisen Überprüfung der einzelnen Radbremsen wird deshalb am Ende der Prüfroutine der Fig. 1 abgefragt, ob sämtliche Radbremsen überprüft worden sind oder nicht.

Wie dies weiter aus der Fig. 2b ersichtlich ist, kann alternativ zu der plötzlichen und ruckartigen Abbremsung der Räder gemäß der Fig. 2a aber auch vorgesehen sein, dass die Räder sanft abgebremst werden, indem zum Beispiel ein lediglich einem Teildruck des maximalen Bremsdrucks entsprechender Druckwert stetig anwachsend und auch wieder absinkend aufgebracht wird. In der Fig. 2c ist schließlich ein Fall dargestellt, der im Wesentlichen der sanften Bremsdruckbeaufschlagung der Fig. 2d entspricht, jedoch mit dem Unterschied, dass hier der Bremsdruck, der auf das Rad bzw. die jeweilige Radbremse aufgebracht wird, dem maximalen Bremsdruck entspricht. Weitere Variationsmöglichkeiten sind jederzeit selbstverständlich möglich, zum Beispiel ein welliger Bremsdruckaufbau oder ein linearer Druckaufbau, um nur zwei weitere Beispiele zu nennen.

## Patentansprüche

1. Verfahren zur Durchführung einer Bremsenprüfung an Anhänger- und/oder Aufliegerfahrzeugen, **gekennzeichnet durch** folgende Verfahrensschritte:
a) Erfassen eines am Zugfahrzeug (1) neu angekoppelten Aufliegers (2) oder Anhängers,
b) Initialisieren einer On-Board-Bremsenprüfung für die Auflieger- oder Anhängerbremsanlage (5),
c) Einleiten wenigstens eines definierten Bremsvorgangs mittels der Auflieger- oder Anhängerbremsanlage (5) nach einer definierten Fahrstrecke,
d) Erfassen und Ermitteln der Bremswirkung des wenigstens einen definierten Bremsvorgangs als Bremswirkung-Istwert, der mit einem vorhandenen Bremswirkung-Sollwert verglichen wird, und
e) Ausgabe eines Informationssignals unter Berücksichtigung des Auswerteergebnisses gemäß Schritt d).

2. Verfahren nach Anspruch 1, **dadurch gekennzeichnet, dass** die Erfassung eines am Zugfahrzeug (1) neu angekoppelten Aufliegers (2) oder Anhängers über wenigstens eine an der Schnittstelle zwischen dem Zugfahrzeug (1) einerseits und dem Anhänger oder Auflieger (2) andererseits ohnehin vorhandene Schnittstellentechnik, vorzugsweise eine elektrische Schnittstelle oder eine Druckluft-Schnittstelle, dergestalt erfolgt,
dass einem Bremsprüf-Steuergerät (4) bzw. -Steuermodul, nach ordnungsgemäßer Ankopplung eines neuen Aufliegers (2) oder Anhängers wenigstens ein Signal und/oder Parameter und/oder Datensatz übermittelt wird, aus dem mittelbar oder unmittelbar definierte Informationen über die zu prüfende Bremsanlage (5) des Aufliegers (2) oder Anhängers sowie gegebenenfalls weitere Informationen über den Typ und/oder den Aufbau und/oder die Beladung und/oder eine vorzugsweise statische Achslast des Aufliegers (2) oder Anhängers ableitbar sind, und
dass anhand der so ermittelten Daten über die zu prüfende Bremsanlage (5) ein im Bremsenprüf-Steuergerät (4) bzw. -Steuermodul hinterlegtes Prüfmuster für die Auflieger - oder Anhängerbremsanlage (5) aufgerufen und/oder aktiviert wird.

3. Verfahren nach Anspruch 1 oder 2, **dadurch gekennzeichnet, dass** die Initialisierung der On-Board-Bremsenprüfung für die Auflieger- oder Anhängerbremsanlage (5) selbsttätig bei jeder erfassten Neuankopplung oder selbsttätig in Abhängigkeit vom erfassten Auflieger- oder Anhängertyp erfolgt.

4. Verfahren nach einem der vorhergehenden Ansprüche, **dadurch gekennzeichnet, dass** die Initialisierung der On-Board-Bremsenprüfung für die Auflieger- oder Anhängerbremsanlage (5) vom Bediener individuell vorgebbar ist, insbesondere per Knopf- oder Tastendruck und/oder per Sprachsteuerung.

5. Verfahren nach einem der vorhergehenden Ansprüche, **dadurch gekennzeichnet, dass** vor oder nach der Durchführung bzw. Initialisierung der On-Board-Bremsenprüfung, insbesondere durch Fahren entlang einer vorgegebenen Wegstrecke, eine Plausibilitätsprüfung durchgeführt wird, mittels der in Abhängigkeit vom Erreichen und/oder Erfüllen und/oder Erfassen vorgegebener Parameter und/oder Werte, insbesondere Schwellwerte, die ordnungsgemäße Durchführungsmöglichkeit der Bremsenprüfung und/oder ein Defekt der Fahrzeugbereifung und/oder ein Defekt einer zur Bremsenprüfung benötigten Baueinheit erfasst wird.

6. Verfahren nach einem der vorhergehenden Ansprüche, **dadurch gekennzeichnet, dass** der wenigstens eine definierte Bremsvorgang spätestens nach einer Fahrtstrecke von 50m und/oder in der Ebene und/oder auf einer eine konstante Steigung aufweisenden Gefällestrecke eingeleitet wird.

7. Verfahren nach einem der vorhergehenden Ansprüche, **dadurch gekennzeichnet, dass** die Radbremsen der Auflieger- oder Anhängerbremsanlage (5) nach einem definiert vorgegebenen Prüfmuster einzeln oder gruppenweise oder vollständig gebremst werden und der jeweils erfasste Bremswirkung-Istwert mit einem entsprechenden die Einzelbremsung oder die gruppenweise Bremsung oder die vollständige Bremsung charakterisierenden Bremswirkung-Sollwert verglichen wird.

8. Verfahren nach Anspruch 7, **dadurch gekennzeichnet, dass** bei einer Einzelbremsung oder bei einer gruppenweisen Bremsung der Bremsen der Auflieger-oder Anhängerbremsanlage (5) mehrere Bremsungen zeitlich gesehen hintereinander durchgeführt werden, bis alle zu prüfenden Bremsen abgebremst und überprüft sind, wobei für jeden einzelnen Bremsvorgang eine definierte Fahrstrecke zur Einleitung des definierten Bremsvorgangs vorgegeben wird.

9. Verfahren nach einem der vorhergehenden Ansprüche, **dadurch gekennzeichnet, dass** der definierte Bremsvorgang dadurch eingeleitet wird, dass an die jeweils abzubremsenden Radbremsen für eine definierte Zeitdauer ein definierter Bremsdruck angelegt wird, wobei die Druckvorgabe bevorzugt so gewählt ist, dass, für einen sanften Bremsvorgang, ein zeitlich gestreckter, stetiger Bremsdruckaufbau bis zu einem definierten Bremsdruckmaximum erfolgt, welches Bremsdruckmaximum kleiner oder gleich dem maximalen Bremsdruck für die jeweilige Radbremse ist, oder dass, für ein schlagartiges Abbremsen, ein plötzlicher, peakartiger Bremsdruck vorgegeben wird, der kleiner oder gleich einem maximalen Bremsdruck für die jeweilige Radbremse ist.

10. Verfahren nach einem der vorhergehenden Ansprüche, **dadurch gekennzeichnet, dass** beim definierten Bremsvorgang nur die Aufhänger- oder Aufliegerbremsanlage (5), nicht jedoch die Bremsanlage eines den Anhänger oder Auflieger (2) ziehenden Zugfahrzeuges (1) bestätigt wird.

11. Verfahren nach einem der vorhergehenden Ansprüche, **dadurch gekennzeichnet, dass** zur Erfassung und Ermittlung der Bremswirkung eines definierten Bremsvorgangs Daten und/oder Parameter wenigstens eines im Fahrzeug installierten elektronisch geregelten Brems- und/oder Fahrwerkssystems, insbesondere eines ABS (Anti-Blockier-Systems) und/oder einer ASR (Anti-Schlupf-Regelung) und/oder einer EBS (Elektronische-Bremsen-Steuerung) und/oder eines ESP (Elektronisches-Stabilitäts-Programms) und/oder einer FDR (Fahrdynamikregelung) und/oder einer ALB (automatisch-lastabhängigen Bremse), erfasst und aus diesem ein Bremswirkung-Istwert, insbesondere ein von der Beladung und/oder der Masse eines Anhängers oder Aufliegers abhängiger Bremswirkung-Istwert, ermittelt wird.

12. Verfahren nach Anspruch 11, **dadurch gekennzeichnet, dass** an dem wenigstens einen abgebremsten Rad (7) mittels wenigstens eines Schlupf- und/oder Drehzahlsensors (8) ein Schlupf und/oder eine Raddrehzahl während des definierten Bremsvorgangs erfasst wird, der bzw. die selbst oder als ein davon abgeleiteter Parameter den Bremswirkung-Istwert darstellt oder darstellen, der mit einem entsprechenden, den Bremswirkung-Sollwert darstellenden Vergleichswert verglichen wird.

13. Verfahren nach einem der vorhergehenden Ansprüche, **dadurch gekennzeichnet, dass** der Bremswirkung-Istwert aus dem zeitlichen Verlauf des Antriebsmomentes der Zugmaschine vor, während sowie gegebenenfalls nach dem definierten Bremsvorgang ermittelt wird, insbesondere durch Vergleich von Beschleunigungswerten, die auf der Basis des Antriebsmomentes der Zugmaschine ermittelt werden.

14. Verfahren nach einem der vorhergehenden Ansprüche, **dadurch gekennzeichnet, dass** bei festgestellter mangel- oder fehlerhafter Anhänger- oder Aufliegerbremsanlage (5) ein Fehlersignal als Informationssignal ausgegeben wird und/oder ein Zugfahrzeugbetrieb gesperrt und/oder die Antriebsleistung des Zugfahrzeugs nur in definiertem Maße zur Verfügung steht.

15. Vorrichtung, die ausgelegt ist, ein Verfahren nach einem der Ansprüche 1 bis 14 durchzuführen.

## Claims

1. Method for carrying out a brake test on trailer vehicles and/or semitrailer vehicles, **characterized by** the following method steps:
a) sensing of a semitrailer (2) or trailer which has been newly hitched to the towing vehicle (1),
b) initialization of an on-board brake test for the semitrailer brake system (5) or trailer brake system (5),
c) initiation of at least one defined braking process by means of the semitrailer brake system (5) or trailer brake system (5) after a defined distance has been traveled,
d) sensing and determination of the braking effect of the at least one defined braking process as a braking effect actual value which is compared with a braking effect setpoint value which is present, and
e) outputting of an information signal taking into account the evaluation result according to step d) .

2. Method according to Claim 1, **characterized in that** the sensing of a semitrailer (2) or trailer which has been newly hitched to the towing vehicle (1) is carried out by means of at least one piece of interface equipment, preferably an electrical interface or a compressed air interface, which is present in any case at the interface between the towing vehicle (1), on the one hand, and the trailer or semitrailer (2), on the other, in such a way
that at least one signal and/or parameter and/or data record from which indirectly or directly defined information about the brake system (5), to be tested, of the semitrailer (2) or trailer as well as, if appropriate, further information about the type and/or the design and/or the cargo and/or a preferably static axle load of the semitrailer (2) or trailer, can be derived, is transmitted to a brake testing control unit (4) or brake testing control module (4), after satisfactory hitching of a new semitrailer (2) or trailer, and
**in that** a test pattern which is stored in the brake testing control unit (4) or brake testing control module (4) for the semitrailer brake system (5) or trailer brake system (5) is called and/or activated on the basis of the data, determined in this way, about the brake system (5) which is to be tested.

3. Method according to Claim 1 or 2, **characterized in that** the initialization of the on-board testing of the brakes for the semitrailer brake system (5) or trailer brake system (5) is carried out automatically whenever a new hitching process is sensed or automatically as a function of the sensed type of semitrailer or trailer.

4. Method according to one of the preceding claims, **characterized in that** the initialization of the on-board testing of the brakes can be predefined individually by the operator for the semitrailer brake system (5) or trailer brake system (5), in particular by pressing a knob or pushbutton key and/or by voice control.

5. Method according to one of the preceding claims, **characterized in that** before or after the execution or initialization of the on-board testing of the brakes, in particular by driving along a predefined road, a plausibility test is carried out by means of which the possibility of carrying out the testing of the brakes in a satisfactory way and/or a defect in the tires of the vehicle and/or a defect in a unit which is required for testing the brakes is sensed as a function of predefined parameters and/or values, in particular threshold values, being reached and/or met and/or sensed.

6. Method according to one of the preceding claims, **characterized in that** the at least one defined braking process is initiated at least after a distance of 50 m and/or on the flat and/or on an inclined section of road having a constant gradient.

7. Method according to one of the preceding claims, **characterized in that** the wheel brakes of the semitrailer brake system (5) or trailer brake system (5) are braked individually or in groups or completely according to a predefined test pattern, and the respectively sensed braking effect actual value is compared with a corresponding braking effect setpoint value which characterizes the individual braking or the group braking or the complete braking.

8. Method according to Claim 7, **characterized in that** in the case of individual braking or in the case of group braking of the brakes of the semitrailer brake system (5) or trailer brake system (5), a plurality of braking operations are carried out in chronological succession until all the brakes to be tested have been braked and checked, wherein, for each individual braking process, a defined driving distance is predefined for the initiation of the defined braking process.

9. Method according to one of the preceding claims, **characterized in that** the defined braking process is initiated by virtue of the fact that a defined brake pressure is applied for a defined time period to the wheel brakes which are to be respectively braked, wherein for a gentle braking process the predefined pressure is preferably selected in such a way that a chronologically extended, continuous buildup of brake pressure occurs up to a defined brake pressure maximum, which brake pressure maximum is less than or equal to the maximum brake pressure for the respective wheel brake, or that, for sudden braking, a sudden, peak-like brake pressure, which is less than or equal to a maximum brake pressure for the respective wheel brake, is predefined.

10. Method according to one of the preceding claims, **characterized in that** during the defined braking process only the trailer brake system (5) or semitrailer brake system (5), but not the brake system of a towing vehicle (1) towing the trailer or semitrailer (2) is actuated.

11. Method according to one of the preceding claims, **characterized in that**, in order to sense and determine the braking effect of a defined braking process, data and/or parameters of at least one electronically controlled brake system and/or chassis system, in particular an ABS (anti-lock brake system) and/or a TCS (traction control system) and/or an EBC (electronic brake controller) and/or an ESP (electronic stability program) and/or a VMDC (vehicle movement dynamics controller) and/or an ALBS (automatic load-dependent brake system), which is installed in the vehicle, are acquired and a braking effect actual value, in particular a braking effect actual value which is dependent on the cargo and/or the mass of a trailer or semitrailer is determined.

12. Method according to Claim 11, **characterized in that** a slip and/or a wheel speed are acquired at the at least one braked wheel (7) by means of at least one slip sensor (8) and/or rotational speed sensor (8) during the defined braking process, which slip and/or wheel speed represents/represent in itself/themselves or as a parameter derived therefrom the braking effect actual value which is compared with a corresponding comparison value which represents the braking effect setpoint value.

13. Method according to one of the preceding claims, **characterized in that** the braking effect actual value is determined from the time profile of the drive torque of the towing machine before, during and, if appropriate, after the defined braking process, in particular by comparison of acceleration values which are determined on the basis of the drive torque of the towing machine.

14. Method according to one of the preceding claims, **characterized in that**, when a defective or faulty trailer brake system (5) or semitrailer brake system (5) is detected, a fault signal is output as an information signal and/or a towing vehicle operating mode is disabled and/or the drive power of the towing vehicle is available only to a defined degree.

15. Device which is configured to carry out a method according to one of Claims 1 to 14.

## Revendications

1. Procédé pour effectuer un contrôle des freins sur des véhicules remorques et/ou semi-remorques, **caractérisé par** les étapes suivantes :
a) détection d'une semi-remorque (2) ou d'une remorque nouvellement attelée au véhicule tracteur (1),
b) initialisation d'un contrôle des freins embarqué pour le système de freinage de la semi-remorque ou de la remorque (5),
c) amorçage d'au moins une opération de freinage définie au moyen du système de freinage de la semi-remorque ou de la remorque (5) après un parcours défini,
d) détection et détermination de l'effet de freinage de l'au moins une opération de freinage définie en tant que valeur réelle d'effet de freinage, laquelle est comparée à une valeur de consigne d'effet de freinage présente, et
e) délivrance d'un signal d'information en tenant compte du résultat de l'interprétation selon l'étape d).

2. Procédé selon la revendication 1, **caractérisé en ce que** la détection d'une semi-remorque (2) ou d'une remorque nouvellement attelée au véhicule tracteur (1) s'effectue par le biais d'au moins une technique d'interface présente de toute façon au niveau de l'interface entre le véhicule tracteur (1) d'un côté et la remorque ou la semi-remorque (2) d'un autre côté, de préférence une interface électrique ou une interface pneumatique, de telle sorte
qu'au moins un signal et/ou un paramètre et/ou un jeu de données est communiqué à un contrôleur ou un module de commande de contrôle de frein (4) après un attelage conforme d'une semi-remorque (2) ou d'une remorque, à partir duquel peuvent être dérivées directement ou indirectement des informations définies à propos du système de freinage (5) à contrôler de la semi-remorque (2) ou de la remorque et éventuellement des informations supplémentaires à propos du type et/ou de la structure et/ou du chargement et/ou d'une charge d'essieu de préférence statique de la semi-remorque (2) ou de la remorque, et
qu'un module de contrôle pour le système de freinage de la semi-remorque ou de la remorque (5), enregistré dans le contrôleur ou le module de commande de contrôle de frein (4), est invoqué et/ou activé à l'aide des données ainsi déterminées à propos du système de freinage (5) à contrôler.

3. Procédé selon la revendication 1 ou 2, **caractérisé en ce que** l'initialisation du contrôle des freins embarqué pour le système de freinage de la semi-remorque ou de la remorque (5) est effectuée automatiquement à chaque nouvel attelage détecté ou automatiquement en fonction du type de semi-remorque ou de remorque détecté.

4. Procédé selon l'une des revendications précédentes, **caractérisé en ce que** l'initialisation du contrôle des freins embarqué pour le système de freinage de la semi-remorque ou de la remorque (5) peut être prédéfinie individuellement par l'opérateur, notamment par une pression sur un bouton ou une touche et/ou par commande vocale.

5. Procédé selon l'une des revendications précédentes, **caractérisé en ce qu'**avant ou après l'exécution ou l'initialisation du contrôle des freins embarqué, notamment par un déplacement le long d'une trajectoire prédéfinie, un contrôle de plausibilité est effectué, au moyen duquel la possibilité d'exécution conforme du contrôle des freins et/ou un défaut des pneumatiques du véhicule et/ou un défaut d'une unité structurale nécessaire pour le contrôle des freins est détectée en fonction de l'atteinte et/ou de la satisfaction et/ou de la détection de paramètres et/ou de valeurs prédéfinis, notamment de valeurs de seuil.

6. Procédé selon l'une des revendications précédentes, **caractérisé en ce que** l'au moins une opération de freinage définie est amorcée au plus tard après un parcours de 50 m et/ou dans le plat et/ou sur un segment incliné présentant une pente constante.

7. Procédé selon l'une des revendications précédentes, **caractérisé en ce que** les freins de roue du système de freinage de la semi-remorque ou de la remorque (5) sont freinés individuellement ou par groupe ou complètement, d'après un modèle de contrôle prédéfini, et la valeur réelle d'effet de freinage respectivement acquise est comparée avec une valeur de consigne d'effet de freinage correspondante qui caractérise le freinage individuel ou le freinage par groupe ou le freinage complet.

8. Procédé selon la revendication 7, **caractérisé en ce que** lors d'un freinage individuel ou d'un freinage par groupe des freins du système de freinage de la semi-remorque ou de la remorque (5), plusieurs freinages sont effectués l'un après l'autre dans le temps jusqu'à ce que tous les freins à contrôler soient freinés et contrôlés, un parcours défini étant prédéterminé pour chaque opération de freinage individuelle en vue d'amorcer l'opération de freinage définie.

9. Procédé selon l'une des revendications précédentes, **caractérisé en ce que** l'opération de freinage définie est amorcée en appliquant aux freins de roue respectivement à freiner une pression de freinage définie pendant une durée définie, l'instruction de pression étant de préférence choisie de telle sorte que pour une opération de freinage en douceur, une mise en pression de freinage constante, étalée dans le temps jusqu'à une pression de freinage maximale définie est effectuée, ladite pression de freinage maximale étant inférieure ou égale à la pression de freinage maximale pour le frein de roue respectif, ou en prédéfinissant, pour un freinage brusque, une pression de freinage soudaine de type de crête qui est inférieure ou égale à une pression de freinage maximale pour le frein de roue respectif.

10. Procédé selon l'une des revendications précédentes, **caractérisé en ce que** lors de l'opération de freinage définie, seul est actionné le système de freinage de la remorque ou de la semi-remorque (5), et toutefois pas encore le système de freinage d'un véhicule tracteur (1) qui tracte la remorque ou la semi-remorque (2).

11. Procédé selon l'une des revendications précédentes, **caractérisé en ce que** pour détecter et déterminer l'effet de freinage d'une opération de freinage définie, des données et/ou des paramètres d'au moins un système de freinage et/ou de châssis à régulation électronique installé dans le véhicule, notamment d'un ABS (système anti-blocage) et/ou d'un ASR (système antipatinage) et/ou d'un EBS (système électronique de freinage) et/ou d'un ESP (électro-stabilisateur programmé) et/ou d'un FDR (régulateur de la dynamique de conduite) et/ou d'un ALB (freinage automatique asservi sur la charge) sont acquis et, à partir de ceux-ci, une valeur réelle de l'effet de freinage, notamment une valeur réelle de l'effet de freinage dépendante du chargement et/ou de la masse d'une remorque ou d'une semi-remorque est déterminée.

12. Procédé selon la revendication 11, **caractérisé en ce qu'**un patinage et/ou une vitesse de rotation de roue est détecté au niveau de l'au moins une roue (7) freinée au moyen d'au moins un capteur (8) de patinage et/ou de vitesse de rotation pendant l'opération de freinage définie, lequel ou lesquels représente(nt) lui-même ou eux-mêmes, ou sous la forme d'un paramètre qui en est dérivé, la valeur réelle de l'effet de freinage qui est comparée avec une valeur comparative correspondante qui représente la valeur de consigne de l'effet de freinage.

13. Procédé selon l'une des revendications précédentes, **caractérisé en ce que** la valeur réelle de l'effet de freinage est déterminée à partir du tracé dans le temps du couple de la machine de traction avant, pendant et éventuellement après l'opération de freinage définie, notamment par une comparaison des valeurs d'accélération qui sont déterminées sur la base du couple d'entraînement de la machine de traction.

14. Procédé selon l'une des revendications précédentes, **caractérisé en ce qu'**en cas de constatation d'un système de freinage de la remorque ou de la semi-remorque (5) défaillant ou défectueux, un signal d'erreur est délivré sous la forme d'un signal d'information et/ou un fonctionnement du véhicule tracteur est bloqué et/ou la puissance motrice du véhicule tracteur n'est disponible que dans une mesure définie.

15. Dispositif, qui est conçu pour mettre en oeuvre un procédé selon l'une des revendications 1 à 14.
